# EUROPEAN PATENT APPLICATION

(11) **EP 2 662 330 A1**
(43) Date of publication of application: **13.11.2013**
(21) Application number: 12167735.5
(22) Date of filing: 11.05.2012
(51) Int. Cl.: C01B 15/037, C01B 15/08, C01B 15/10, C01B 15/12

(54) **Peroxygen release compositions with active thickener and method for producing them**

(71) Applicant: Creachem SA, 1920 Martigny (CH)
(72) Inventor: Lakaye, Frédéric, 62780 Stella Plage (FR); De Windt, Wim, 9040 Sint-Amandsberg (BE)
(74) Representative: Plucker, Guy

(57) **Abstract**

The invention provides stabilized peroxygen containing compositions with the structure of a gel or a viscous dispersion. The compositions contain a newly synthesized solid thickener which itself is a peroxide-containing substance. The thickener in the present invention not only increases viscosity of the composition, but furthermore also improves the peroxygen release capacity of the composition. The invention discloses a dispersion of calcium or magnesium perborate, calcium or magnesium percarbonate, calcium or magnesium persulfate or calcium or magnesium peracetate solids in an aqueous hydrogen peroxide solution, the hydrogen peroxide being present in an amount comprised between 0.5 % and 50 wt %, said solids being formed in said aqueous hydrogen peroxide solution in a concentration of about 2.0 % wt to about 20.0 % wt, with an average crystal size in the range of about 1 µm to about 100 µm, and the composition having a viscosity of about 150 cP to about 30,000 cP

The gel composition of the invention is suitable for disinfection or wound healing purposes, cleaning, personal care, pharmaceutical, textile bleaching, environmental applications and industrial applications.

## Description

### FIELD OF THE INVENTION

The present invention relates to the fields of: disinfection, cleaning, personal care, pharmaceutical, textile bleaching, environmental applications and industrial applications.

### DOMAIN OF THE INVENTION

Increasing attention is being paid by industry and public worldwide to the environmental effects of many substances employed in modem life. Since substances comprising chlorine and oxychlorine derivatives have been reported to generate under certain conditions carcinogenic compounds, industry is seeking alternatives or replacements for these substances for a range of purposes, such as disinfection, oxidation and bleaching. Many of these are encountered domestically. Peroxygen compounds, comprising the classes of products hydrogen peroxide, persalts and peracids, are excellent candidates to replace chlorine substances in these applications, since they are environmentally benign.

Apart from persalts, few peroxide-containing substances are solid compounds. The most well-known solid peroxides are calcium peroxide and magnesium peroxide, and the 3 most common persalts that are often formulated in solid form are sodium percarbonate, sodium perborate (mono- and tetra hydrate) and alkali metal salts of peroxymonosulfuric acid. These products are soluble in water and release, by hydrolysis, hydrogen peroxide and carbonate, metaborate (and, finally, boric acid) or sulfate together with their counter-ions, respectively, in water.

The release kinetics of hydrogen peroxide for the different peroxide-containing solid compounds known from the art, strongly depend on the characteristics of both the solvent (water) and the compound in question. Important characteristics in the water are e.g. pH, temperature and hardness or, generally, the chemical composition of the water. pH determines the dissolution rate of said peroxide-containing solids, e.g. in the case of calcium peroxide which is dissolved in (hydrochloric) acid solutions and thereby converted into hydrogen peroxide, calcium oxide and calcium (chloride) at acidic pH. pH further plays an important role in the stability of hydrogen peroxide, which tends to be more stable in its undissociated form, at more acidic pH. Temperature plays an important role in the dissolution rate of persalts in water, and hence the hydrolysis into hydrogen peroxide. Sodium perborate is known in the art to be soluble in water at a higher temperature (hot water) ranges than sodium percarbonate, which is well soluble in warm water. The role of water hardness or water chemistry in the hydrogen peroxide release of said peroxide-containing compounds is related to the release of free ions, often alkaline earth metal ions, sodium, potassium or calcium, from said compounds and the equilibrium of these ions between precipitation and dissolution. Precipitation reactions may result in encapsulation of the peroxide-containing compound by an outer shell of (inert) solids, hampering further hydrogen peroxide release into the water.

Some applications require fast release of hydrogen peroxide coupled with stability of hydrogen peroxide, e.g. bleaching and detergent applications, where the oxidant is preferably active during the complete wash cycle, or disinfection, where the active substance hydrogen peroxide needs to be in contact with the contamination preferably during the complete disinfection cycle. Other applications require also a time component in the release of hydrogen peroxide, demanding a timed-release composition, e.g. in environmental applications where oxidation processes need to continue for a certain time, e.g. in soil remediation or water treatment. More often, however, a combination of both processes is required in many applications: i.e. immediate fast release of hydrogen peroxide coupled to a slower release of hydrogen peroxide over time. It is clear that, given the lack of stability of peroxide upon dissociation in water, many applications in water require a prolonged release of hydrogen peroxide to overcome fast decomposition and to provide a residual effect.

Liquid peroxygen compositions are particularly appropriate for the treatment of or incorporation into liquid media, however they are less appropriate for the treatment of solid surfaces, particularly non-horizontal surfaces, since they quickly run down from said surfaces. Thickeners are added to liquid peroxygen compositions to increase their residence time on surfaces or, more generally, to keep the peroxygen in place, to enhance their aesthetics, to provide ease of use, or to suspend other components of the composition. Thickeners or thickening agents are defined as materials which thicken the liquid or introduce structure into the liquid. Polymeric thickening agents include, for example, synthetic polymers, cellulose esters, and biopolymers. Synthetic polymers include, for example, homopolymers and copolymers of unsaturated carboxylic acid and/or anhydride monomers, such as acrylic acid, methacrylic acid, etc. The copolymers are preferably comprised of a carboxylic acid monomer and a hydrophobic monomer, typically long chain acrylate or methacrylate esters. Cellulose esters include, for example carboxymethyl cellulose. Biopolymers include, for example, xanthan gum or polysaccharides such as guar gum. Many thickeners for other liquids are not compatible with liquid peroxygen compositions, due to the very properties of peroxygen compounds that make them effective oxidizing and bleaching agents. Interaction with thickeners during storage can result in the mutual decomposition of the peroxygen compound and the thickener.

The viscosity of thickened peroxygen release compositions can be modified by changing the thickening agent or agents used, and by changing their concentration. Synthetic polymers for example, typically provide a viscosity of about 10,000 to 100,000 cP, whereas polysaccharides may result in a viscosity in the range of 500 cP to 5,000 cP. Tooth whitening gels typically have a viscosity greater than about 10,000 cP. Liquid detergents are typically in the range of 500 cP to about 2,000 cP.

In its dissociated form (HOO-), peroxide is a rather unstable molecule. Persalts such as sodium percarbonate are also known from the prior art to be relatively unstable, especially in contact with humidity. Moreover, the presence of organic molecules or metallic compounds such as metal ions catalyzes hydrogen peroxide decomposition. Therefore, many additives to stabilize peroxygen release compositions have been described in the patent literature such as sodium silicate, benzoic acid, chelating agents or sequestrants such as ethylenediamine tetraacetic acid (EDTA), complex organo-phosphates such as phosphonates, phosphorous compounds, stannates and many others. It is also common practice to coat the surface of sodium percarbonate grains with borate, silicate, sulfate or carbonate when it is used together with zeolite in detergent compositions, in order to increase stability.

The prior art requires thickeners that are not restricted to a narrow pH range, and that can be combined with high concentrations of a peroxygen compound without triggering a decomposition reaction. The prior art further requires peroxygen release compositions that provide the following benefit during application: immediate and rapid peroxygen release combined with residual peroxygen release over time.

### PRIOR ART

US 4,255,277 discloses a stable and non-separating paste, containing benzoyl peroxide powder mixed with 30 to 40 % wt of a finely divided calcium carbonate, obtained e.g. in precipitated form or ground form, and between 4 to 36 % wt of water. Whereas the peroxide paste obtained through this invention is storage stable, the thickener takes up a significant portion of the dry matter of the paste composition, but does not contribute to the peroxidizing performance of the product. Hence, the product is significantly diluted with a great portion of inert solids, up to 40 % wt to obtain a paste.

US 2003/0148906 discloses a stable liquid or gel bleaching composition containing 0.1 to 5 % of solid diacyl peroxide particles for cleaning and stain removal, while minimizing filming and deposition when used in an automatic dishwashing machine. Small diacyl peroxide particles from about 0.1 to about 30 microns are suspended in an aqueous system where they remain insoluble. Although peroxide solids are hence present in an aqueous dispersion, additionally 0.1 % to 5 % of a polymeric thixotropic thickener needs to be added to provide sufficient product thickness and stability.

US2007/0183987 discloses the use of poly(2-ethyl-2-oxazoline) for the creation of peroxide gels for various applications, containing up to 30 % of hydrogen peroxide while maintaining a shelf life of 6 months. Such a polymer is disclosed to be a superior polymer in oxidizing peroxide environments at these strengths to other thickening polymers like CARBOPOL, silica, PVP and polyethylene glycols. Higher peroxide concentrations are hence achieved with this invention.

US006083422 relates to thickened aqueous bleach compositions, e.g. peroxygen bleaches. It is recognized by the inventors that the compositions are particularly difficult to thicken with sufficient stability for commercial value. The compositions according to this invention comprise a polymeric rheology modifying agent, such as a cross-linked acrylic acid polymer thickener, present in an amount from 0.01 to 10 %. Additionally, rheology stabilizers need to be added to be able to maintain the viscosity in a given range. Rheology stabilizers such as anisic alcohol or anisic aldehyde are described.

US 4,788,052 discloses a stable aqueous hydrogen peroxide gel dentifrice comprising an inorganic, fumed silica gelling agent and hydrogen peroxide. Fumed silica is anhydrous silicic acid and will not allow higher pH ranges in said compositions. To bind the product into a viscous, moisture-retaining gel, additionally, about 20 % to 40 % of a polyethylene glycol humectant need to be present. Distilled water is preferred to prevent minimal contamination.

Cassidy and Irvine (1999) reported that H₂O₂ is a common source of oxygen for oxygenating groundwater in environmental applications. They cited several challenges to the *in situ* use including the competition for oxygen by metals and humic substances, oxygen released at rates greater than the consumption by microorganisms and the toxicity of hydrogen peroxide at concentrations required to achieve biological treatment (Spain et al. 1989; Pardieck et al. 1992). To promote a slower release of oxygen, they also cite the use of sodium percarbonate, magnesium peroxide and calcium peroxide as a solid oxygen source. Magnesium peroxide and calcium peroxide were reported to be orders of magnitude less water soluble than sodium percarbonate (Weast 1998), which allows them to release oxygen over prolonged periods. The water solubility and dissolving speed of solid peroxide compounds is hence an important factor contributing to the overall hydrogen peroxide release kinetics of the compound.

When used in pesticide formulations, advantages of controlled-release systems may include a less active agent, fewer application, more effective control of target organisms, reduced toxicity to nontarget organisms, and reduced environmental effects (Shasha B.S. et al., 1976). Hence, slow-release pesticides are required. US 6,764,612 provides encapsulated peroxide compositions, by forming supported peroxides. The supported peroxides according to the invention are solid particles that include an organic peroxide, a metallic soap, and a polymer. An emulsion is formed into an aqueous solution by reacting the polymer with a compound forming a water soluble soap. A polyvalent metal compound (e.g. magnesium, calcium) is then reacted with the water soluble soap to form a water insoluble metallic soap, that precipitates from the suspension.

Stabilizers have been developed to improve the stability of thickened liquid peroxidizing composition. Stabilizers are discussed, for example in US Patent numbers 5,997,764 and 6,083,422. Wang identifies an improvement by adding, next to a polymeric thickening agent, also a 3-component stabilizer system, including phosphorous-containing stabilizers in US 7,045,493. Polymeric organic substances are inherently unstable in contact with hydrogen peroxide, since the latter is an oxidant and may oxidize organic molecules. Presence of metallic ions or organic impurities further catalyze hydrogen peroxide decomposition.

The color of liquid cleaning compositions is also an important factor, both from an aesthetic and performance point of view. US2006/0094631 for example discloses the addition of coloring agents to a cleaning composition, to temporarily indicate coverage.

In US 6,306,811 a solution is provided to avoid decomposition of sodium percarbonate compositions during storage, particularly in detergent compositions built with zeolites. It was found that the tendency to decompose can be ameliorated by selecting sodium percarbonate particules with larger particle sizes, in the range 500 - 1000 micron, and not more than 20 % by weight below 350 micron. Small crystal size was reported to be a determining factor for larger contact surface area with other components and possibly more rapid moisture pick-up, leading in this case to decomposition.

In US2001/0044398 is described an enzyme and percarbonate containing detergent, enzymes constituting a washing aid through enzymatic degradation of soils present on the fabric or hard surface. Synergistic improvements are described of a peroxidic oxidizing agent and a genetically modified protease.

### AIM OF THE INVENTION

According to a first aspect of the present invention, the goal is to provide a thickened peroxygen release composition in the form of a gel or a viscous dispersion, wherein the thickener itself is a peroxide-containing substance, stabilized into an aqueous hydrogen peroxide solution. Hence, the thickener increases viscosity of the composition, but furthermore also improves and increases the peroxygen content and release capacity of the composition during the application. Furthermore, said thickener according to the present invention is inert towards further oxidation by peroxygen compounds, thus a more stable composition is obtained. In a further embodiment, the thickener provides the peroxygen release composition with an aspect of residual (slow) release of peroxygen over time.

According to a second aspect, the present invention relates to a method to produce a thickened peroxygen composition. According to a particular embodiment of this invention, said peroxygen release composition may be further dried into a powder, granulate or a dried composition with any shape or volume.

### SUMMARY OF THE INVENTION

Calcium perborate is a high-value fine boron chemical that can be used as drier for ink or pigment, and as deactivator of certain polyolefin catalysts. According to a first aspect of the present invention, it has surprisingly been found that alkaline earth metal perborate crystals, alkaline earth metal peracetate crystals, alkaline earth metal percarbonate crystals, and alkaline earth metal persulfate crystals when newly synthesized into an aqueous hydrogen peroxide solution, produce a viscous dispersion or gel that may function as a stable peroxygen release system. In a preferred embodiment, said aqueous hydrogen peroxide solution is stabilized by a range of hydrogen peroxide stabilizers, such as phosphorous stabilizers, stannates, or other known stabilizing agents or combinations of stabilizers for peroxygen compounds. The dispersion or gel may be further dried into a stable, white powder or granulate.

Preferred alkaline earth metals are calcium and magnesium.

The peroxygen release composition of the invention is characterized by a two-stage hydrogen peroxide release system:
(1) an aqueous hydrogen peroxide or peracid stabilized into the gel structure of said composition, corresponding to about 1 % wt to about 50 % wt of the composition
(2) a solid peroxide-containing thickener, such as micronized calcium or magnesium perborate or calcium or magnesium peracetate Ca(CH₃COO-O⁻)₂, or calcium or magnesium percarbonate, or calcium or magenesium persulfate, preferably in an amount of about 5 % to about 80 % by weight of the composition.

Hydrogen peroxide release typically occurs during the application when the composition is diluted in a solvent. The hydrogen peroxide may be distributed onto or inside of the thickener's particles, or alternatively both the hydrogen peroxide and the solid thickener may be chemically added to form a perhydrate compound.

The composition of the invention may further comprise 0,5 to 10% w/w, preferably 2 to 5 % w/w, of a stabilizing agent. Such stabilizing agents are known per se and may be selected from phosphonates, such as AMP (Amino-tris-(methylene-phosphonic acid), ATMP (Amino tris(methylene phosphonic acid)), EDTMP (ethylenediamine tetra(methylene phosphonic acid)), DTPMP (diethylenetriamine penta(methylene phosphonic acid)), HDTMP (hexamethylenediamine tetra(methylene phosphonic acid)), PBTC (Phosphonobutane-tricarboxylic acid), PMIDA (N-(phosphonomethyl)iminodiacetic acid), CEPA (2-carboxyethyl phosphonic acid), HPAA (2-Hydroxyphosphonocarboxylic acid), 1,10-phenanthroline, 8-hydroxyquinoline, citric acid, nitrilotriacetic acid, sodium silicate, benzoic acid, chelating agents or sequestrants such as ethylenediamine tetraacetic acid (EDTA), phosphorous compounds such as pyrophosphate, stannates and others. These stabilizing agents suitably protect the peroxygen compound from decomposition or reduction by environmental conditions such as light, temperature, impurities or other factors.

According to a second aspect, this invention relates to a method for producing peroxygen release composition, comprising steps of:
(a) reacting a water soluble calcium or magnesium containing salt with either:
   - percarbonic acid or a water soluble salt thereof
   - perboric acid or a water soluble salt thereof
   - acetic or peracetic acid or a water soluble salt thereof
   - peroxymonosulfuric acid or a water soluble salt thereof
   - a combination of aforementioned acids or salts
   in an aqueous hydrogen peroxide solution at a reaction temperature of 5 to 80 °C in a mixing apparatus to form a dispersion of an alkaline earth metal, preferably calcium or magnesium, perborate, peracetate, percarbonate, or persulfate;
(b) thickening the dispersion through a suitable concentration technique into a moist, viscous composition.

In a preferred embodiment, the reaction temperature is between 15 °C and 40 °C

According to a further embodiment, said peroxygen release composition is dried to a dry product or powder by applying a suitable drying technique to said dispersion. During drying, and depending on the drying method, gel particles may agglomerate into larger aggregates, e.g. aggregates of tens or hundreds of µm to several mm. The suitable dehydration or drying technique preferably does not increase the product temperature above the range of 60 °C to 80 °C during drying. Said dry product may be further treated to obtain a granulate. In yet another embodiment, the viscous dispersion or gel composition may be dried into the desired volume or shape.

### DETAILED DESCRIPTION OF THE INVENTION

According to a first aspect, the present invention concerns a peroxygen release composition, comprising a dispersion of alkaline earth metal, preferably calcium or magnesium, perborate, percarbonate, peracetate, or persulfate solids or combinations thereof in an aqueous hydrogen peroxide solution, the hydrogen peroxide being present in an amount comprised between 0.5 % ad 50 wt % of the total composition, said solids being formed in an aqueous hydrogen peroxide solution and are present in a concentration of about 2.0 % wt to about 20.0 % wt of the total composition, with an average crystal size in the range of about 1 µm to about 100 µm, and the composition having a viscosity of about 150 cP to about 30,000 cP, in the absence of additional thickening agent.

In contrast to known products, the peroxygen release composition of the present invention or produced by the present process is a stable gel or a viscous dispersion comprising a solid thickener which itself is a peroxide-containing substance. The thickener increases viscosity of the composition, but furthermore also improves the peroxygen release capacity of the composition during the application. In a further embodiment, the thickener provides the peroxygen release composition with an aspect of residual (slow) release of peroxygen over time.

The peroxygen release composition according to the present invention, can be produced in high concentrations and can easily be separated from the original aqueous solvent, e.g. based on density difference by centrifugation. This allows for a cost-effective production method.

According to the present invention, the perborate, percarbonate, peracetate or persulfate crystals are preferably formed *de novo* by precipitation, by reacting dissolved calcium ions on the one hand with perborate, percarbonate, persulfate or peracetate ions on the other hand, in an aqueous peroxide solution.

The person skilled in the art will be able to adapt the pH of the composition to the stability requirements.

Perborate can be converted into hydrogen peroxide through the following pathway (Equation 1):

B₂O₄(OH)₄²⁻ --> 2 BO₂⁻ + 2 H₂O₂ **Eq. 1.**

The perborate according to the present invention may be crystallized as a mono-, tri-, tetrahydrate. A thickening agent according to the present invention, consisting preferably of solid calcium or magnesium perborate or calcium or magnesium percarbonate or calcium or magnesium peracetate, or calcium or magnesium persulfate hence can be further converted to hydrogen peroxide.

Peracetatic acid in water can be converted to hydrogen peroxide according to Equation 2:

CH₃COO-OH+H₂O --> CH₃COOH + HO-OH **Eq. 2.**

Preferably, the alkaline earth metal salts, such as calcium or magnesium salts or persalts, e.g. calcium chloride (CaCl₂.2H₂O) or sodium perborate (NaBO₃·nH₂O), are essentially free of impurities. Suitable hydrogen peroxide solutions for the present invention may comprise 1 to 70 w % hydrogen peroxide in water. Technical grade hydrogen peroxide, e.g. a commercial 27.5 % hydrogen peroxide solution with a pH in the range of 1.5 - 4.0 is preferred. The peracetic acid solution advantageously has a concentration of 3 % to 50 %; preferably 5 to 35 %. A food-grade solution of peracetic acid may be used, and e.g. in the range of 5.0 - 10.0 % wt peracetic acid. An aqueous solution of peracetic acid is in equilibrium between peracetate or peracetic acid on the one hand and acetic acid or acetate with hydrogen peroxide on the other hand.

According to a preferred embodiment, a stabilizing agent may be added to the composition, for prolonged storage and stability, in an amount of from 0.5 to 10%, more preferably 2 to 5%, and may be selected from phosphonates, such as AMP (Amino-tris-(methylenephosphonic acid), ATMP (Amino tris(methylene phosphonic acid)), EDTMP (ethylenediamine tetra(methylene phosphonic acid)), DTPMP (diethylenetriamine penta(methylene phosphonic acid)), HDTMP (hexamethylenediamine tetra(methylene phosphonic acid)), PBTC (Phosphonobutane-tricarboxylic acid), PMIDA (N-(phosphonomethyl)iminodiacetic acid), CEPA (2-carboxyethyl phosphonic acid), HPAA (2-Hydroxyphosphonocarboxylic acid), 1,10-phenanthroline, 8-hydroxyquinoline, citric acid, nitrilotriacetic acid, sodium silicate, benzoic acid, chelating agents or sequestrants such as ethylenediamine tetraacetic acid (EDTA), phosphorous compounds such as pyrophosphate, stannates and others.

According to a preferred embodiment of the invention, calcium or magnesium perborate, calcium or magnesium percarbonate, calcium or magnesium peracetate, or calcium or magnesium persulfate may be present in an amount of 2 to 20 % wt. According to a more preferred embodiment, calcium perborate is present in an amount of 3 to 15 % wt, or even more preferably 4 to 10 % by weight.

A concentrated, thickened dispersion of the peroxygen release composition, for instance with a viscosity in the range of 5,000 - 20,000 cP, according to the present invention can be diluted with water, for example diluted 1 to 10 times, preferably 2 to 5 times, resulting in a stable dispersion with a decreased viscosity, e.g. in the range of 200 cP - 1,000 cP.

In order to broaden the disinfectant and/or bleaching spectrum of the composition, suitable additives may advantageously be added to the composition, preferably selected from peracetate, persulfate, benzoyl peroxide, iodophores, quaternary ammonium salts, and any combination thereof.

In yet another embodiment, between about 0.25 % wt and 25 % wt of a surfactant or emulsifier, or a mixture of surfactants or emulsifiers, is added to the composition.

According to a further embodiment, the peroxygen release composition according to the current invention is further dried to obtain a powder, granulate or dried composition with any shape of volume, such as tablets.

In a preferred embodiment, said composition is dewatered with a suitable drying technology into a composition containing:
- at least about 50 wt % of calcium or magnesium perborate, calcium or magnesium peracetate, calcium or magnesium persulfate or calcium or magnesium percarbonate
- at least about 5 % wt to about 30 % wt of free hydrogen peroxide, not present in an adduct or hydrate
- at most about 20 % wt of water

In yet another embodiment, where the composition is used in environmental applications, bacteria or enzymes may be added to the composition. The degradation product of hydrogen peroxide is oxygen, and oxygen stimulates biological environmental processes. For example, when the composition is dried into the shape of tablets, spores of specific *Bacillus* sp. strains may be added to the composition in order to stimulate (per-)oxygen-driven degradation of hydrocarbons or other compounds.

In yet another embodiment, a soluble persulfate salt may be added to the stable composition to have a dual oxidant composition in a viscous and stable dispersion. An important synergy between both oxidants may be found in such applications as bleaching or environmental processes (in situ chemical oxidation).

According to a second aspect, this invention relates to a method for producing a peroxygen release composition, comprising the steps of:
(a) reacting a water soluble alkaline earth metal, preferably calcium or magnesium, containing salt with either:
   - percarbonic acid or a water soluble salt thereof
   - perboric acid or a water soluble salt thereof
   - acetic or peracetic acid or a water soluble salt thereof
   - peroxymonosulfuric acid or a water soluble salt thereof , or
   - combinations thereof
   in an aqueous hydrogen peroxide solution at a reaction temperature of 5 to 80 °C in a mixing apparatus to form a dispersion of alkaline earth metal, preferably calcium or magnesium, perborate, percarbonate, peracetate or persulfate;
(b) thickening the thus obtained dispersion by way of a suitable concentration technique into a moist, viscous composition, gel or paste containing at least 2 wt % and preferably 10 wt % to 20 wt % of solids.

According to a preferred embodiment of this method, the mixing is continued until particles are formed with a suitable size in the range of 1 µm - 100 µm.

The reaction temperature preferably is comprised between 15 °C and 40 °C.

Furthermore, a stabilizing agent may be added to the aqueous hydrogen peroxide solution, such as a stannate stabilizer, or a phosphorous containing stabilizer, or a mixture of phosphorous containing stabilizers, or a chelating agent, or any combination of aforementioned stabilizers.

In an industrial production process, the reaction may be designed as a batch crystallization process, as a continuous crystallization process, as a once-through flow system, or other suitable process designs.

The water soluble alkaline earth metal salt, such as Ca²⁺ or Mg²⁺ salt, may be either added to the reaction as a solid or as a concentrated aqueous solution or aqueous hydrogen peroxide solution. Suitable calcium salts are e.g. calcium chloride or calcium nitrate. Suitable magnesium salts are e.g. magnesium chloride, or magnesium acetate. The percarbonate or perborate or (per-)acetate salt may be either added to the reaction as a solid or as a concentrated aqueous solution or aqueous hydrogen peroxide solution, in order to have the final solution as concentrated as possible. Suitable solutions of said salts in aqueous hydrogen peroxide may be obtained for instance through the following non-limiting list of examples: by dissolving sodium perborate in an aqueous solution or aqueous hydrogen peroxide solution having a concentration of 1 - 70 w%, e.g. in a 27.5 % hydrogen peroxide solution; by dissolving sodium borate (borax) in an aqueous hydrogen peroxide solution, e.g. in a 27.5 % hydrogen peroxide solution, preferentially in the presence of sodium hydroxide; or by dissolving sodium percarbonate in an aqueous hydrogen peroxide solution, e.g. in a 27.5 % hydrogen peroxide solution.

In a preferred embodiment of this method, thickening of the dispersion may be achieved by disc centrifugation, decanter centrifuge or filtration.

In a further embodiment, said peroxygen release composition is dried to a dry product or powder by applying a suitable drying technique to said dispersion, such as spray drying, fluidized bed drying, evaporation, vacuum drying, drying by air, belt drying, drying in a rotating drum, or any other suitable technique to remove moisture. The drying may be applied directly to the said dispersion or to the thickened dispersion, obtained by a suitable concentration technique.

According to a preferred embodiment, said dry product may be further treated by compacting to shells, breaking and screening the shells, dry granulating the broken and screened material to obtain a granulate. In yet another embodiment, the viscous composition may be dried to any other solid form of any shape or volume, such as produced by cutting, breaking, compacting or molding the viscous composition into the desired shape before drying. The viscous paste obtained with the present invention is especially suitable for drying or compacting into a certain shape or mold.

The suitable dehydration or drying technique preferably does not increase the product temperature above the range of 60 °C to 80 °C during drying.

The peroxygen release composition of the invention may be used in liquid or solid oxygen bleaches for applications in the fields of detergents, laundry, paper & pulp. The composition according to the present invention is further suitable for use in disinfectants, cleaning agents, pharmaceutical, textile, environmental applications (soil and water) and industrial applications and in various personal care applications such as hair and tooth whitening. The viscosity and white color of the thickened dispersion, make the composition compatible with commercial liquid bleach formulations and sanitizing or disinfecting formulations suitable for foam spraying or other means of application on non-horizontal surfaces. The composition may also be suitable for use in wound care or wound dressing bandages.

The present invention is not restricted to the exemplified embodiments and the scope of protection extends to variations and modifications that fall within the scope of the claims.

### EXAMPLE I. Preparation of a viscous peroxygen release composition with perborate and stabilizing agent

30g CaCl₂.2H₂O was dissolved in 500ml 27,5% hydrogen peroxide by magnetic stirring (ca. 1000rpm) for approximately 15 minutes. Meanwhile, 500 ml 27,5% hydrogen peroxide was added to 60 g NaBO₃.4H₂O under continuous stirring and heating (65 °C). To the latter solution, 13.5 mL diethylenetriamine penta(methylene phosphonic acid) was added. The two solutions were poured together and agitated for at least 1 hour. The white precipitate calcium perborate formed immediately. The dispersion was poured over a filter with a pore size of maximum 5 µm. The dispersion was allowed to concentrate on the filter during 16 hours. The remaining gel on the filter was found to be slightly unstable, as indicated by small gas bubbles that appeared inside of the structure. A total of 297 g gel was obtained. When 2 g the composition was added to 1 L tapwater, about 400 ppm of hydrogen peroxide was released into the water immediately, as evidenced by peroxide colorimetric reaction strips (Merck).

### EXAMPLE II. Preparation of a viscous peroxygen release composition with perborate and higher concentration of stabilizing agent

16g Ca(NO₃)₂.4H₂O was dissolved in 500ml 27,5% hydrogen peroxide by magnetic stirring for approximately 15 minutes. Meanwhile, 500 ml 27,5% hydrogen peroxide was added to 60 g NaBO₃.4H₂O under continuous stirring and heating (65 °C). To the latter solution, 20 mL diethylenetriamine penta(methylene phosphonic acid) was added. The two solutions were poured together and agitated for at least 1 hour. A white precipitate formed immediately. The dispersion was poured over a filter with a pore size of maximum 5 µm. The dispersion was allowed to concentrate on the filter during 16 hours. The remaining gel on the filter was found to be very stable, and of white-transparent color. A total of approx. 200 g gel was obtained. When left standing, the viscosity of the gel increased from approx. 150 cP immediately after filtration to about 5,000 cP after 1 week. Hence, the gel was concluded to be thixotropic in nature.

### EXAMPLE III. Preparation of a viscous peroxygen release composition with peracetic acid

10 g CaCl₂.2H₂O was dissolved in 500 mL 27,5% hydrogen peroxide by magnetic stirring; 20 g sodium acetate was dissolved in 500 mL 27,5 % hydrogen peroxide. To the latter solution, 13.5 mL diethylenetriamine penta(methylene phosphonic acid) was added. The two solutions were poured together and agitated for at least 1 hour. A white precipitate formed immediately, possibly a combination of calcium peracetate and calcium acetate. The dispersion was poured over a filter with a pore size of maximum 5 µm . The dispersion was allowed to concentrate on the filter during 16 hours. The remaining gel on the filter was found to be stable. A total of about 105 g gel was obtained.

### EXAMPLE IV. Preparation of a more concentrated viscous peroxygen release composition with perborate and higher concentration of stabilizing agent

48 g Ca(NO₃)₂.4H₂O was dissolved in 500ml 27,5% hydrogen peroxide by magnetic stirring for approximately 15 minutes. Meanwhile, 500 ml 27,5% hydrogen peroxide was added to 60 g NaBO₃.4H₂O under continuous stirring and heating (65 °C). To the latter solution, 20 mL diethylenetriamine penta(methylene phosphonic acid) was added. The two solutions were poured together and agitated for at least 1 hour. A white precipitate formed immediately. The dispersion was poured over a filter with a pore size of maximum 5 µm . The dispersion was allowed to concentrate on the filter during 16 hours. The remaining gel on the filter was found to be very stable, and of white color. A total of approx. 328 g gel was obtained. When left standing, the viscosity of the gel increased from approx. 200 cP immediately after filtration to more than about 5,000 cP after 1 week. Hence, the gel was concluded to be thixotropic in nature.

### EXAMPLE V. Preparation of a more concentrated viscous peroxygen release composition with sodim borate and higher concentration of stabilizing agent

50 g CaCl₂.2H₂O was dissolved in 500 mL 27,5% hydrogen peroxide by magnetic stirring; 38 g Na₂B₄O₇.10H₂O was dissolved in 500 mL 27,5 % hydrogen peroxide. To the latter solution, 25 mL diethylenetriamine penta(methylene phosphonic acid) was added. The two solutions were poured together and agitated for at least 1 hour. A white precipitate formed immediately, possibly calcium perborate. The dispersion was poured over a filter with a pore size of maximum 5 µm . The dispersion was allowed to concentrate on the filter during 16 hours.. A total of about 246 g gel was obtained.

### EXAMPLE VI.

The composition obtained from Example IV after filtration was dried in an air flow of approx. 25 °C. The resulting dry product could be ground into a fine powder and was found to be composed of approx. 15 % wt to 20 % wt of (free) hydrogen peroxide.

## Claims

1. A peroxygen release composition comprising a dispersion of alkaline earth metal, preferably calcium or magnesium, perborate, percarbonate, persulfate or peracetate solids or combinations thereof in an aqueous hydrogen peroxide solution, the hydrogen peroxide being present in an amount comprised between 0.5 % ad 50 wt % of the total composition, said solids being formed in an aqueous hydrogen peroxide solution and are present in a concentration of about 2.0 % wt to about 20.0 % wt of the total composition, with an average crystal size in the range of about 1 µm to about 100 µm, and the composition having a viscosity of about 150 cP to about 30,000 cP, in the absence of additional thickening agent.

2. The composition according to claim 1 further comprising 0,5 to 10% w/w, preferably 2 to 5% w/w, of a stabilizing agent, preferably selected from phosphonates, such such as AMP (Amino-tris-(methylene-phosphonic acid), ATMP (Amino tris(methylene phosphonic acid)), EDTMP (ethylenediamine tetra(methylene phosphonic acid)), DTPMP (diethylenetriamine penta(methylene phosphonic acid)), HDTMP (hexamethylenediamine tetra(methylene phosphonic acid)), PBTC (Phosphonobutane-tricarboxylic acid), PMIDA (N-(phosphonomethyl)iminodiacetic acid), CEPA (2-carboxyethyl phosphonic acid), HPAA (2-Hydroxyphosphonocarboxylic acid), 1,10-phenanthroline, 8-hydroxyquinoline, citric acid, nitrilotriacetic acid, sodium silicate, benzoic acid, chelating agents or sequestrants such as ethylenediamine tetraacetic acid (EDTA), phosphorous compounds such as pyrophosphate, or stannates.

3. The composition according to any of claims 1 or 2 further comprising 0,25 to 25 % w/w of a surfactant, or a combination of surfactants, or an emulsifier.

4. The composition according to any of claims 1 to 4 further comprising 0,1 to 10 % w/w of bacterial biomass.

5. The composition according to any of the claims 1 to 5, further comprising 0,1 to 10 % of persulfate, quaternary ammonium compounds, benzalkonium chloride, iodophor, benzoyl peroxide or any combinations thereof.

6. Method for producing a peroxygen release composition, comprising steps of:
(a) reacting a water soluble calcium or magnesium containing salt with either:
- percarbonic acid or a water soluble salt thereof
- perboric acid or a water soluble salt thereof
- acetic or peracetic acid or a water soluble salt thereof
- peroxymonosulfuric acid or a water soluble salt thereof
- combinations of said perboric or percarbonic acids or peracetic acids or respective salts
in an aqueous solution of hydrogen peroxide or a peracid or both, at a reaction temperature of 5 to 80 °C in a mixing apparatus into a dispersion of alkaline earth metal, preferably calcium or magnesium, perborate, peracetate, persulfate, or percarbonate.
(b) thickening the thus obtained dispersion by way of a suitable concentration technique known per *se* into a moist, viscous composition.

7. Method according to claim 6 wherein the aqueous solution of hydrogen peroxide further comprises benzoyl peroxide or other organic peroxide, persulfate, quaternary ammonium compounds, benzalkonium chloride, iodophor, surfactant or any combination thereof.

8. Method according to claim 6 wherein said aqueous peroxide solution is a 1 % to 70 % by weight solution.

9. Method according to any of the claims 6 to 8 wherein the molar ratio of calcium or magnesium to the acids, percarbonic acid, perboric acid, acetic acid or peracetic acid, peroxymonosulfuric acid, or salts thereof is between 0.5 to 1 and 1 to 4.

10. Method according to claim 9 wherein the water soluble calcium containing salt is calcium chloride or calcium nitrate and the water soluble magnesium containing salt is magnesium chloride or magnesium acetate

11. Method according to claim 10 wherein the water soluble calcium or magnesium containing salt is dissolved in hydrogen peroxide.

12. Method according to claim 9 wherein the salt of percarbonic acid is sodium percarbonate, or the salt of perboric acid is sodium perborate.

13. Method according to any of claims 6 to 12, wherein the composition is dried to a dry product by applying a suitable drying technique to said dispersion, such as spray drying, fluidized bed drying, evaporation, vacuum drying, freeze drying, drying by air, belt drying, drying in a rotating drum, or any other suitable technique to remove moisture while not increasing the product temperature above the range of 60 °C to 80 °C during drying, and optionally further treated to obtain a granulate or any other volume or shape.

14. A dry composition obtained by the process of any of the claims 12 to 13, containing:
- at least about 50 wt % of an alkaline earth metal, preferably calcium or magnesium, perborate, peracetate, persulfate and/or percarbonate
- at least about 5 % wt to about 30 % wt of free hydrogen peroxide, not present as an adduct or hydrate
- at most about 20 % wt of water

15. Use of a composition of any of claims 1 to 6 or obtained according to the method of any of claims 7 to 14 for bleaching, disinfection, cleaning or soil treatment purposes
